# EUROPEAN PATENT APPLICATION

(11) **EP 1 030 237 A1**
(43) Date of publication of application: **23.08.2000**
(21) Application number: 99301100.6
(22) Date of filing: 15.02.1999
(51) Int. Cl.: G06F 1/00, G06F 12/14

(54) **Trusted hardware device in a computer**

(71) Applicant: Hewlett-Packard Company, Palo Alto, California 94304 (US)
(72) Inventor: Proudler, John, Meade Park, Bristol BS12 6XQ (GB); Balacheff, Boris, St.Michael's Hill, Bristol BS2 8DG (GB); Pearson, Sian Lynne, Westbury on Trym, Bristol BS9 3PZ (GB); Chen, Liquin, Bradley Stroke, Bristol BS32 9DQ (GB); Chan, David, Henleaze, Bristol BS9 4SR (GB); Gupta, Dipankar, Mountain, View California 94040 (US)
(74) Representative: Lawman, Matthew John Mitchell

(57) **Abstract**

In a computing platform, a trusted hardware device (14) is added to the motherboard (10). The trusted hardware device (14) is configured to acquire an integrity metric, for example a hash of the BIOS memory (19), of the computing platform. The trusted hardware device (14) is tamper-resistant, difficult to forge and inaccessible to other functions of the platform. The hash can be used to convince users that that the operation of the platform (hardware or software) has not been subverted in some way, and is safe to interact with in local or remote applications.

In more detail, the main processing unit (11) of the computing platform is directed to address the trusted hardware device (14), in advance of the BIOS memory, after release from 'reset'. The trusted hardware device (14) is configured to receive memory read signals from the main processing unit (11) and, in response, return instructions, in the native language of the main processing unit (11), that instruct the main processing unit to establish the hash and return the value to be stored by the trusted hardware device (14). Since the hash is calculated in advance of any other system operations, this is a relatively strong method of verifying the integrity of the system. Once the hash has been returned, the final instruction calls the BIOS program and the system boot procedure continues as normal.

Whenever a user wishes to interact with the computing platform, he first requests the integrity metric, which he compares with an authentic integrity metric that was measured by a trusted party. If the metrics are the same, the platform is verified and interactions can continue. Otherwise, interaction halts on the basis that the operation of the platform may have been subverted.

## Description

### Technical Field

The present invention generally relates to trusted devices, trusted computing platforms, trusted transactions and methods of operating the same.

### Background Art

For commercial applications, a client computing platform typically operates in an environment where its behaviour is vulnerable to modification by local or remote entities. This potential insecurity of the platform is a limitation on its use by local parties who might otherwise be willing to use the platform, or remote parties who might otherwise communicate with the platform; for example, for the purposes of E-commerce. For the present purposes, both local parties and remote parties will be referred to as "users" unless otherwise stated.

Existing security applications, for example virus detection software, execute on computing platforms under the assumption that the platform will operate as intended and that the platform will not subvert processes and applications. This is a valid assumption provided that the intended software state has not become unstable or has not been damaged by other software such as viruses. Users, therefore, typically restrict the use of such platforms to noncritical applications, and weigh the convenience of the using the platforms against the risk to sensitive or business critical data.

Increasing the level of trust in platforms therefore enables greater user confidence in existing security applications (such as the 'Secure Sockets Layer' or 'IPSec') or remote management applications. This enables greater reliance on those applications and hence reduced 'cost of ownership'. Greater trust also enables new electronic methods of business, since there is greater confidence in the correct operation of both local and remote computing platforms.

In this document, the word 'trust' is used in the sense that something can be 'trusted' if it always behaves in the way it is expected to behave.

### Disclosure of the Invention

The present inventors have appreciated that it is desirable to use a physical device in a computing platform to verify and possibly enforce trust in that platform. Typically, the device provides trusted measurement and reporting of attributes of the associated platform, which indicate the integrity of the platform. Also, most preferably, the device is tamper-resistant.

In accordance with a first aspect, the present invention provides computing apparatus comprising mounted on an assembly main processing means and main memory means, each being connected for communication with one or more other components on the assembly,
characterised by further comprising a trusted device mounted on the assembly and being connected for communications with one or more other components on the assembly, the trusted device being arranged to acquire a true value of an integrity metric of the computing apparatus.

As used herein for reasons of simplicity of description, the term "device" also encompasses plural devices having equivalent function, or equivalent functionality integrated into one or more existing platform devices or assemblies. Additionally, the term 'true' as used herein implies that the value is that which correctly reflects the state of the computing apparatus. This may be ensured if the measurement method is substantially un-modifiable other than by the trusted device.

In accordance with a second aspect, the present invention provides a method of operating a system comprising trusted computing apparatus and a user, the trusted computing apparatus incorporating a trusted device being arranged to acquire the true value of an integrity metric of the computing apparatus, the method comprising the steps of:
the trusted device acquiring the true value of the integrity metric of the trusted computing apparatus;
the user generating a challenge for the trusted computing apparatus to prove its integrity and submitting the challenge to the trusted computing apparatus;
the trusted computing apparatus receiving the challenge, and the trusted device generating a response including the integrity metric and returning the response to the user; and
the user receiving the response, extracting the integrity metric from the response and comparing the integrity metric with an authenticated metric for the trusted computing apparatus that had been generated by a trusted party.

In accordance with a third aspect, the present invention provides a method of establishing a communications channel in a system between trusted computing apparatus and remote computing apparatus, the method including the step of the remote computing apparatus verifying the integrity of the trusted computing apparatus using the above method, and maintaining the communications channel for further transactions in the event the integrity of the trusted computing apparatus is successfully verified by the remote computing apparatus.

In accordance with a fourth embodiment, the present invention provides a method of verifying that trusted computing apparatus is trustworthy for use by a user for processing a particular application, the method including the step of the user verifying the integrity of the trusted computing apparatus using the above method, and the user using the trusted computing apparatus to process the particular application in the event the integrity of the trusted computing apparatus is successfully verified by the remote computing apparatus.

Other aspects and embodiments of the present invention will become apparent from the following description and claims.

### Brief Description of the Drawings

A preferred embodiment of the present invention will now be described by way of example only with reference to the accompanying drawings in which:
Figure 1 is a diagram which shows the motherboard of computing apparatus adapted to include a trusted device according to an embodiment of the present invention;
Figure 2 is a diagram which shows in more detail the trusted device shown in Figure 1;
Figure 3 is a diagram which shows in the contents of a certificate stored in the trusted device;
Figure 4 is a diagram, which shows the features of a measurement function responsible for acquiring an integrity metric;
Figure 5 is a flow diagram which illustrates the steps involved in acquiring an integrity metric of the computing apparatus; and
Figure 6 is a flow diagram which illustrates the steps involved in establishing communications between a trusted computing platform and a remote platform including the trusted platform verifying its integrity.

### Best Mode For Carrying Out the Invention, & Industrial Applicability

The present exemplary embodiment generally provides the incorporation into a computing platform of a physical trusted device whose function is to bind the identity of the platform to reliably measured data that provides an integrity metric of the platform. The identity and the integrity metric are compared with expected values provided by a trusted party (TP) that is prepared to vouch for the trustworthiness of the platform. If there is a match, the implication is that at least part of the platform is operating correctly, depending on the scope of the integrity metric.

A user verifies the correct operation of the platform before exchanging other data with the platform. A user does this by requesting the trusted device to provide its identity and an integrity metric. (Optionally the trusted device will refuse to provide evidence of identity if it itself was unable to verify correct operation of the platform.) The user receives the proof of identity and the identity metric, and compares them against values which it believes to be true. Those proper values are provided by the TP or another entity that is trusted by the user. If data reported by the trusted device is the same as that provided by the TP, the user trusts the platform. This is because the user trusts the entity. The entity trusts the platform because it has previously validated the identity and determined the proper integrity metric of the platform.

Once a user has established trusted operation of the platform, he exchanges other data with the platform. For a local user, the exchange might be by interacting with some software application running on the platform. For a remote user, the exchange might involve a secure transaction. In either case, the data exchanged is 'signed' by the trusted device. The user can then have greater confidence that data is being exchanged with a platform whose behaviour can be trusted.

The trusted device uses cryptographic processes but does not necessarily provide an external interface to those cryptographic processes. Also, a most desirable implementation would be to make the trusted device tamperproof, to protect secrets by making them inaccessible to other platform functions and provide an environment that is substantially immune to unauthorised modification. Since tamper-proofing is impossible, the best approximation is a trusted device that is tamper-resistant, or tamper-detecting. The trusted device, therefore, preferably consists of one physical component that is tamper-resistant.

Techniques relevant to tamper-resistance are well known to those skilled in the art of security. These techniques include methods for resisting tampering, methods for detecting tampering, and methods for eliminating data when tampering is detected. It will be appreciated that, although tamper-proofing is a most desirable feature of the present invention, it does not enter into the normal operation of the invention and, as such, is beyond the scope of the present invention and will not be described in any detail herein.

The trusted device is preferably a physical one because it must be difficult to forge. It is most preferably tamper-resistant because it must be hard to counterfeit. It typically has an engine capable of using cryptographic processes because it is required to prove identity, both locally and at a distance, and it contains at least one method of measuring some integrity metric of the platform with which it is associated.

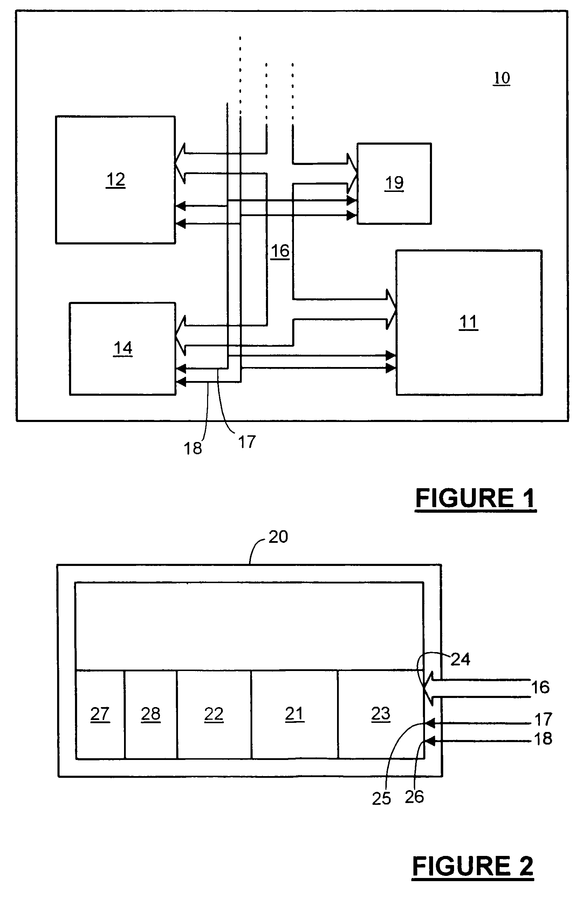

Figure 1 illustrates the motherboard 10 of an exemplary computer platform (not shown). The motherboard 10 includes (among other standard components) a main processor 11, main memory 12, a trusted device 14, a data bus 16 and respective standard control lines 17 and address lines 18, and BIOS memory 19 containing the BIOS program for the platform.

Typically, the BIOS program is located in a special reserved memory area, the upper 64K of the first megabyte do the system memory (addresses FØØØh to FFFFh), and the main processor is arranged to look at this memory location first, in accordance with an industry wide standard

The significant difference between the platform and a conventional platform is that, after reset, the main processor is initially controlled by the trusted device, which then hands control over to the platform-specific BIOS program, which in turn initialises all input/output devices as normal. After the BIOS program has executed, control is handed over as normal by the BIOS program to an operating system program, such as Windows NT (TM), which is typically loaded into main memory 12 from a hard disk drive (not shown).

Clearly, this change from the normal procedure requires a modification to the implementation of the industry standard, whereby the main processor 11 is directed to address the trusted device 14 to receive its first instructions. This change may be made simply by hard-coding a different address into the main processor 11. Alternatively, the trusted device 14 may be assigned the standard BIOS program address, in which case there is no need to modify the main processor configuration.

Although, in the preferred embodiment to be described, the trusted device 14 is a single, discrete component, it is envisaged that the functions of the trusted device 14 may alternatively be split into multiple devices on the motherboard, or even integrated into one or more of the existing standard devices of the platform. For example, it is feasible to integrate one or more of the functions of the trusted device into the main processor itself, provided that the functions and their communications cannot be subverted. This, however, would probably require separate leads on the processor for sole use by the trusted functions. Additionally or alternatively, although in the present embodiment the trusted device is a hardware device that is adapted for integration into the motherboard 10, it is anticipated that a trusted device may be implemented as a 'removable' device, such as a dongle, which could be attached to a platform when required. Whether the trusted device is integrated or removable is a matter of design choice.

The trusted device 14 comprises a number of blocks, as illustrated in Figure 2: a controller 20 for controlling the overall operation of the trusted device 14, and interacting with the other functions on the trusted device 14 and with the other devices on the motherboard 10; a measurement function 21 for acquiring an integrity metric from the platform; a cryptographic function 22 for signing or encrypting specified data; and interface circuitry 23 having appropriate ports (24, 25 & 26) for connecting the trusted device 14 respectively to the data bus 16, control lines 17 and address lines 18 of the motherboard 10. Each of the blocks in the trusted device 14 has access (typically via the controller 20) to appropriate volatile memory areas 27 and/or non-volatile memory areas 28 of the trusted device 14.

For reasons of performance, the trusted device 14 may be implemented as an application specific integrated circuit (ASIC). However, for flexibility, the trusted device is preferably an appropriately programmed micro-controller. Both ASICs and micro-controllers are well known in the art of microelectronics and will not be considered herein in any further detail.

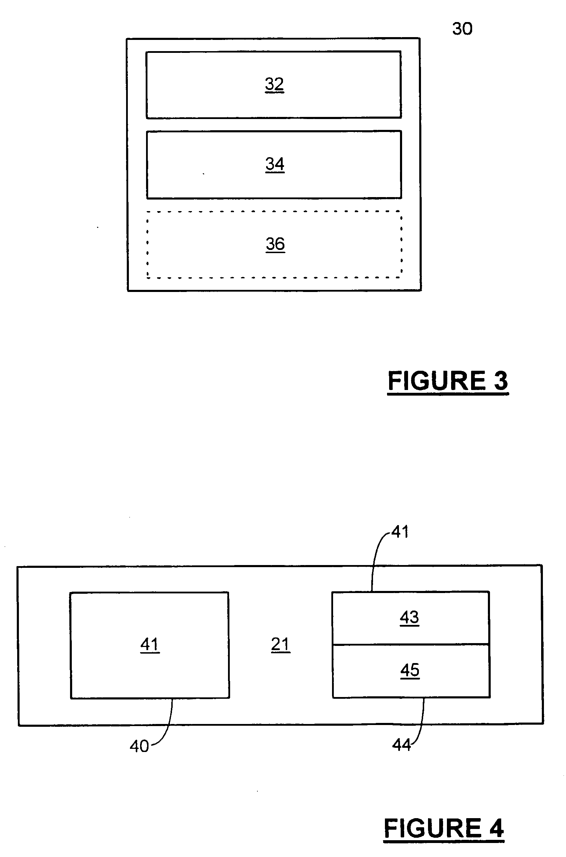

One item of data stored in the non-volatile memory is a certificate 30, which is illustrated in Figure 3. The certificate 30 contains at least a public key 32 of the trusted device 14 and an authenticated value of a platform integrity metric 34 measured by a TP. Optionally, the trusted device 14 also contains an identity (ID) label 36 of the trusted device 14.

Where present, the ID label 36 is a conventional ID label, for example a serial number, that is unique within some context. The ID label 36 is generally used for indexing and labelling of data relevant to the trusted device 14, but is insufficient in itself to prove the identity of the platform under trusted conditions.

The trusted device 14 is equipped with at least one method of reliably measuring some integrity metric of the computing platform with which it is associated. The integrity metric is acquired by the measurement function 21, which is illustrated in more detail in Figure 4.

The measurement function 21 has access to non-volatile memory 40 for storing a hash program 41, plus volatile memory 42 for storing a computed integrity metric 43, in the form of a digest. The hash program 41 contains instructions for computing the digest, in code that is native to the main processor 11. In addition, part of the measurement function 21 is configured to respond to the main processor 11 as if it were addressable memory, such as standard read-only memory, by sensing memory read signals addressed to the trusted device 14 and returning appropriate data. The result is that the main processor 11 sees the trusted device, for the purposes of integrity metric measurement, as a standard read-only memory.

In the preferred implementation, as well as the digest, the integrity metric includes a Boolean value 44, which is stored in volatile memory 45 by the measurement function 21, for reasons that will become apparent.

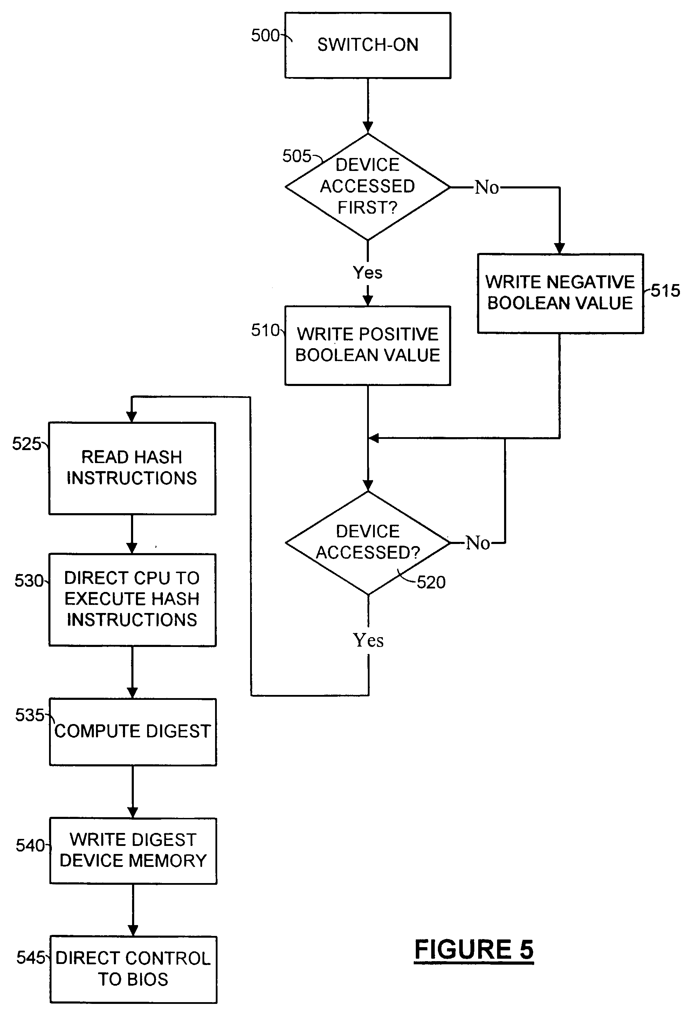

A preferred process for acquiring an integrity metric will now be described with reference to Figure 5.

In step 500, at switch-on, the measurement function 21 monitors the activity of the main processor 11 on the data, control and address lines (16, 17 & 18) to determine whether the trusted device 14 is the first memory accessed. Under conventional operation, a main processor would first be directed to the BIOS memory first in order to execute the BIOS program. However, in accordance with the present embodiment, the main processor 11 is directed to the trusted device 14, which acts as a memory. In step 505, if the trusted device 14 is the first memory accessed, in step 510, the measurement function 21 writes to non-volatile memory 45 a Boolean value 44, which indicates that the trusted device 14 was the first memory accessed. Otherwise, in step 515, the measurement function writes a Boolean value 44, which indicates that the trusted device 14 was not the first memory accessed.

In the event the trusted device 14 is not the first accessed, there is of course a chance that the trusted device 14 will not be accessed at all. This would be the case, for example, if the main processor 11 were manipulated to run the BIOS program first. Under these circumstances, the platform would operate, but would be unable to verify its integrity on demand, since the integrity metric would not be available. Further, if the trusted device 14 were accessed after the BIOS program had been accessed, the Boolean value 44 would clearly indicate lack of integrity of the platform.

In step 520, when (or if) accessed as a memory by the main processor 11, the main processor 11 reads the stored native hash instructions 41 from the measurement function 21 in step 525. The hash instructions 41 are passed for processing by the main processor 11 over the data bus 16. In step 530, main processor 11 executes the hash instructions 41 and uses them, in step 535, to compute a digest of the BIOS memory 19, by reading the contents of the BIOS memory 19 and processing those contents according to the hash program. In step 540, the main processor 11 writes the computed digest 43 to the appropriate non-volatile memory location 42 in the trusted device 14. The measurement function 21, in step 545, then calls the BIOS program in the BIOS memory 19, and execution continues in a conventional manner.

Clearly, there are a number of different ways in which the integrity metric may be calculated, depending upon the scope of the trust required. The measurement of the BIOS program's integrity provides a fundamental check on the integrity of a platform's underlying processing environment. Other integrity checks could involve establishing that various other devices, components or apparatus attached to the platform are present and in correct working order. In one example, the BIOS programs associated with a SCSI controller could be verified to ensure communications with peripheral equipment could be trusted. In another example, the integrity of other devices, for example memory devices or co-processors, on the platform could be verified by enacting fixed challenge/response interactions to ensure consistent results. Also, although in the present embodiment the trusted device 14 utilises the data bus as its main means of communication with other parts of the platform, it would be feasible, although not so convenient, to provide alternative communications paths, such as hard-wired paths or optical paths. Further, although in the present embodiment the trusted device 14 instructs the main processor 11 to calculate the integrity metric, it is anticipated that, in other embodiments, the trusted device itself will be arranged to measure one or more integrity metrics.

Preferably, the BIOS boot process includes mechanisms to verify the integrity of the boot process itself. Such mechanisms are already known from, for example, Intel's draft "Wired for Management baseline specification v 2.0 - BOOT Integrity Service", and involve calculating digests of software or firmware before loading that software or firmware. Such a computed digest is compared with a value stored in a certificate provided by a trusted entity, whose public key is known to the BIOS. The software/firmware is then loaded only if the computed value matches the expected value from the certificate, and the certificate has been proven valid by use of the trusted entity's public key. Otherwise, an appropriate exception handling routine is invoked.

Optionally, after receiving the computed BIOS digest, the trusted device 14 may inspect the proper value of the BIOS digest in the certificate and not pass control to the BIOS if the computed digest does not match the proper value. Additionally, or alternatively, the trusted device 14 may inspect the Boolean value 44 and not pass control back to the BIOS if the trusted device 14 was not the first memory accessed.

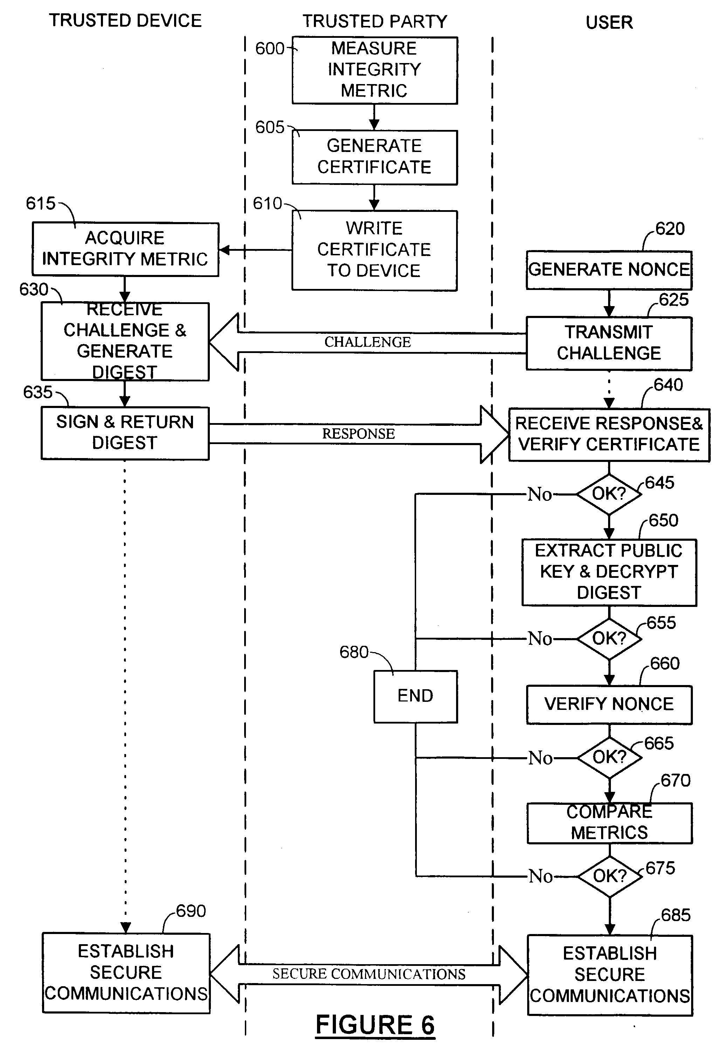

Figure 6 illustrates the flow of actions by a TP, the trusted device 14 incorporated into a platform, and a user (of a remote platform) who wants to verify the integrity of the trusted platform. It will be appreciated that substantially the same steps as are depicted in Figure 6 are involved when the user is a local user. In either case, the user would typically rely on some form of software application to enact the verification. It would be possible to run the software application on the remote platform or the trusted platform. However, there is a chance that, even on the remote platform, the software application could be subverted in some way. Therefore, it is anticipated that, for a high level of integrity, the software application would reside on a smart card of the user, who would insert the smart card into an appropriate reader for the purposes of verification.

At the first instance, a TP, which vouches for trusted platforms, will inspect the type of the platform to decide whether to vouch for it or not. This will be a matter of policy. If all is well, in step 600, the TP measures the value of integrity metric of the platform. Then, the TP generates a certificate, in step 605, for the platform. The certificate is generated by the TP by appending the trusted device's public key, and optionally its ID label, to the measured integrity metric, and signing the string with the TP's private key.

The trusted device 14 can subsequently prove its identity by using its private key to process some input data received from the user and produce output data, such that the input/output pair is statistically impossible to produce without knowledge of the private key. Hence, knowledge of the private key forms the basis of identity in this case. Clearly, it would be feasible to use symmetric encryption to form the basis of identity. However, the disadvantage of using symmetric encryption is that the user would need to share his secret with the trusted device. Further, as a result of the need to share the secret with the user, while symmetric encryption would in principle be sufficient to prove identity to the user, it would insufficient to prove identity to a third party, who could not be entirely sure the verification originated from the trusted device or the user.

In step 610, the trusted device 14 is initialised by writing the certificate 30 into the appropriate non-volatile memory locations of the trusted device 14. This is done, preferably, by secure communication with the trusted device 14 after it is installed in the motherboard 10. The method of writing the certificate to the trusted device 14 is analogous to the method used to initialise smart cards by writing private keys thereto. The secure communications is supported by a 'master key', known only to the TP, that is written to the trusted device (or smart card) during manufacture, and used to enable the writing of data to the trusted device 14; writing of data to the trusted device 14 without knowledge of the master key is not possible.

At some later point during operation of the platform, for example when it is switched on or reset, in step 615, the trusted device 14 acquires and stores the integrity metric 42 of the platform.

When a user wishes to communicate with the platform, in step 620, he creates a nonce, such as a random number, and, in step 625, challenges the trusted device 14 (the operating system of the platform, or an appropriate software application, is arranged to recognise the challenge and pass it to the trusted device 14, typically via a BIOS-type call, in an appropriate fashion). The nonce is used to protect the user from deception caused by replay of old but genuine signatures (called a 'replay attack') by untrustworthy platforms. The process of providing a nonce and verifying the response is an example of the well-known 'challenge/response' process.

In step 630, the trusted device 14 receives the challenge and creates a digest of the measured integrity metric and the nonce, and optionally its ID label. Then, in step 635, the trusted device 14 signs the digest, using its private key, and returns the signed digest, accompanied by the certificate 30, to the user.

In step 640, the user receives the challenge response and verifies the certificate using the well known public key of the TP. The user then, in step 650, extracts the trusted device's 14 public key from the certificate and uses it to decrypt the signed digest from the challenge response. Then, in step 660, the user verifies the nonce inside the challenge response. Next, in step 670, the user compares the computed integrity metric, which it extracts from the challenge response, with the proper platform integrity metric, which it extracts from the certificate. If any of the foregoing verification steps fails, in steps 645, 655, 665 or 675, the whole process ends in step 680 with no further communications taking place.

Assuming all is well, in steps 685 and 690, the user and the trusted platform use other protocols to set up secure communications for other data, where the data from the platform is preferably signed by the trusted device 14.

The techniques of signing, using certificates, and challenge/response, and using them to prove identity, are well known to those skilled in the art of security and will, thus, not be described in any more detail herein.

## Claims

1. Computing apparatus comprising mounted on an assembly main processing means and main memory means, each being connected for communication with one or more other components on the assembly,
characterised by further comprising a trusted device mounted on the assembly and being connected for communications with one or more other components on the assembly, the trusted device being arranged to acquire a true value of an integrity metric of the computing apparatus.

2. Computing apparatus according to claim 1, wherein the trusted device comprises device memory means and means for instructing the main processing means to determine the integrity metric and return the integrity metric for storage in the device memory means.

3. Computing apparatus according to claim 2, wherein the means for instructing the main processing means comprises, stored in the device memory means, program code native to the main processing means, and the trusted device is arranged to transfer the instructions of the program code to the main processing means.

4. Computing apparatus according to claim 3, wherein the platform is arranged to cause the instructions to be the first instructions executed after release from reset.

5. Computing apparatus according to claim 3 or claim 4, wherein the trusted device is arranged to transfer the instructions to the main processing means in response to memory read signals from the main processing means.

6. Computing apparatus according to any one of claims 1 to 5, wherein the trusted device comprises device memory means and is arranged to monitor the data bus means and store in the device memory means a flag in the event the first memory read signals generated by the main processing means after the computing apparatus is released from reset are addressed to the trusted device.

7. Computing apparatus according to any one of claims 1 to 6, wherein the trusted device has stored in device memory means at least one of:
a unique identity of the trusted device;
an authenticated integrity metric generated by a trusted party; and
a secret.

8. Computing apparatus according to claim 7, wherein the trusted device has stored in device memory means a secret comprising a private asymmetric encryption key.

9. Computing apparatus according to claim 8, wherein the trusted device also has stored in device memory means a respective public encryption key that has been signed by a trusted party.

10. Computing apparatus according to claim 8 or claim 9, wherein the trusted device has stored in device memory means an authenticated integrity metric generated by a trusted party and includes a encryption function, the trusted device being arranged to generate a response to a received challenge, the response comprising an acquired integrity metric and the authenticated integrity metric, both signed by the encryption function using the private asymmetric encryption key.

11. A trusted device configured for use in computing apparatus according to any one of the preceding claims.

12. A method of operating a system comprising trusted computing apparatus and a user, the trusted computing apparatus incorporating a trusted device being arranged to acquire the true value of an integrity metric of the computing apparatus, the method comprising the steps of:
the trusted device acquiring the true value of the integrity metric of the trusted computing apparatus;
the user generating a challenge for the trusted computing apparatus to prove its integrity and submitting the challenge to the trusted computing apparatus;
the trusted computing apparatus receiving the challenge, and the trusted device generating a response including the integrity metric and returning the response to the user; and
the user receiving the response, extracting the integrity metric from the response and comparing the integrity metric with an authenticated metric for the trusted computing apparatus that had been generated by a trusted party.

13. A method according to claim 12, wherein the challenge includes a nonce, the response includes the integrity metric and the nonce, both digitally signed by the trusted device using a encryption algorithm, and the user verifies the integrity metric and the nonce using a respective encryption algorithm.

14. A method according to claim 13, wherein the trusted device uses a private encryption key to sign the integrity metric and the nonce, and the user uses the respective public encryption key to verify the integrity metric and the nonce.

15. A method according to claim 14, wherein the response includes a certificate held by the trusted device, which certificate has been digitally signed by a trusted party using a private encryption key of the trusted party, the certificate including the public encryption key of the trusted device, and the user verifies the certificate using the public encryption key of the trusted party and uses the public encryption key from the certificate to verify the integrity metric and the nonce.

16. A method of establishing a communications channel in a system between trusted computing apparatus and remote computing apparatus, the method including the step of the remote computing apparatus verifying the integrity of the trusted computing apparatus using the method according to any one of claims 12 to 15, and maintaining the communications channel for further transactions in the event the integrity of the trusted computing apparatus is successfully verified by the remote computing apparatus.

17. A method of verifying that trusted computing apparatus is trustworthy for use by a user for processing a particular application, the method including the step of the user verifying the integrity of the trusted computing apparatus using the method according to any one of claims 12 to 15, and the user using the trusted computing apparatus to process the particular application in the event the integrity of the trusted computing apparatus is successfully verified by the remote computing apparatus.

18. Trusted computing apparatus adapted for use in accordance with the method of any one of claims 12 to 17.

19. Remote computing apparatus arranged for use in accordance with claim 16.

20. A trusted device arranged for use in accordance with any one of claims 12 to 17.

21. Computing apparatus configured to receive a trusted device as claimed in claim 11.
